# EUROPEAN PATENT APPLICATION

(11) **EP 3 085 246 A1**
(43) Date of publication of application: **26.10.2016**
(21) Application number: 15164240.2
(22) Date of filing: 20.04.2015
(51) Int. Cl.: A23L 5/00, A23L 7/10, A23L 7/161, A23L 27/00, A23L 5/40

(54) **A METHOD FOR ENCAPSULATING ADDITIVES INTO SEEDS, BEANS, CEREALS AND NUT KERNELS**

(71) Applicant: Sensient Flavors Limited, Bletchley Milton Keynes MK1 1HP (GB)
(72) Inventor: Whitehead, Ian, 1978 Lens (CH); Duran, Ulises, 54080 Tlalnepantla (MX)
(74) Representative: Roufosse, Micheline C.

(57) **Abstract**

The present invention discloses the use of supercritical carbon dioxide for injecting additives to seeds and kernels.

## Description

### Field of the invention.

The present invention discloses the use of supercritical carbon dioxide for injecting additives into seeds, beans, cereals and nut kernels.

### Background.

In the food industry, there is an increasing demand for flavoured seeds, beans, cereals and nut kernels for use in food applications. There is also a demand to provide heat-stable flavouring systems for food products that are prepared using high temperature cooking methods including baking, grilling and frying.

An example of this requirement is flavoured and/or coloured popcorn. The traditional way to prepare flavoured popcorn was to add the flavouring after popping the kernels. It was a necessary requirement as the kernels must be covered with, or cooked in, vegetable oil prior to cooking and that said oil reaches temperature of between 200 and 320 °C that would burn or damage flavours and other ingredients added prior to the cooking step.

Seasoning systems for flavouring popcorn contain materials to add base notes and mouth-feel to the whole product. However, such materials are heat-labile and often cannot withstand the heating temperature and time for cooking the kernels typically ranging between 200 and 320 °C during a period of time of 1 to 3 min. They include, but are not limited to vegetable powders that can be selected from onion, garlic and chili peppers, or milk solids, or protein powders or carbohydrates such as sugars. They can also include encapsulated flavours that have been spray dried or encapsulated onto carrier agents such as maltodextrins, modified starches, emulsifying gums, proteins, alginates and other materials known in the art, that are used in the manufacturing of powdered flavours. Such products suffer from the high temperatures reached during cooking without protecting the liquid flavour inside the matrix. The exposure of such products to the high temperatures of 200 to 320 °C encountered in microwave cooking process, leads to scorching and burning and the consequent generation of highly undesirable burnt odours and tastes.

Furthermore, the traditional method of flavouring popcorn by the topical application of a seasoning powder or coating, suffers from the disadvantage that the flavor is only present on the surface of the popcorn. This leads to a rapid loss of flavour impact as the popcorn is masticated in the mouth, leading to consumer dissatisfaction

In addition, although there are a limited number of flavours or flavouring ingredients that can be added to the cooking oil, e.g. butter flavour, the materials had to be largely limited to those that were resistant to the high thermal stress encountered during the cooking process. More subtle and delicate flavourings or flavouring ingredients, that were most likely to suffer loss through evaporation, thermal degradation or thermally-catalysed reactions, could therefore not be used to flavour popcorn.

Popcorn is typically eaten by hand. As a consequence, flavouring materials coating popcorn were invariably and undesirably transferred to the hands and fingers rather than to the mouth with the drawback of loss of popcorn flavouring and unpleasantly smelling hands and fingers. Additonally, coloured flavourings and coatings lead to undesirable staining of the hands and fingers.

Also, flavoured popcorns may comprise mixed flavours such as for example the 'Chicago mix'. Such mix comprises a mixture of cheese and toffee flavoured popcorn. It is desirable that individual popcorn retain the original flavouring but that the whole bulk pack contain a mixture of these flavoured popcorn. It is however undesirable that individual popcorn become contaminated with opposing flavourings or colourings. In the case of the 'Chicago mix' it is impossible to prevent toffee-flavoured popcorn becoming cross-contaminated with cheese flavour from the cheese-flavoured popcorn and vice versa. Such a drawback can only be prevented by manufacturing individual flavoured batches and by creating the mixed flavour batch at the point of consumption thereby requiring a large and complex serving arrangement.

Flavoured popcorn kernels packages must therefore contain separate pouches of unpopped corn kernels and flavouring.

It is thus desirable to provide simple one-pouch packages containing un-popped popcorn kernels together with a complete and heat-stable flavouring system and/or mixtures of these.

Another disadvantage of the traditional flavouring method is that the flavours only coat the surface of the seeds or kernels, thereby providing a very weak and transient flavouring.

It is thus desirable to provide seeds, beans, cereals and nut kernels offering an intense and long-lasting flavour.

### Summary of the invention.

It is an objective of the present invention to provide a method for injecting flavours inside seeds, beans, cereals and nut kernels.

It is also an objective of the present invention to provide flavoured seeds, beans, cereals and nut kernels offering an intense and long-lasting flavour.

It is another objective of the present invention to provide flavoured corn kernels that can be flavoured prior to cooking.

It is also an objective of the present invention to add flavour ingredients to seeds, beans, cereals and nut kernels.

It is yet another objective of the present invention to add colouring to seeds, beans, cereals and kernels.

It is also an objective of the present invention to add sweeteners to seeds, beans, cereals and nut kernels.

It is a further objective of the present invention to add antioxidants to seeds, beans, cereals and nut kernels.

It is another objective of the present invention to add vitamins to seeds, beans, cereals and nut kernels.

It is yet a further objective of the present invention to add other functional ingredients to seeds, beans, cereals and nut kernels with examples such as, but not limited to, taste modulators including taste potentiators and taste masking agents.

It is also an object of the present invention to provide ready to eat one-pouch mixed flavoured seeds, beans, cereals and nut kernels.

Any one or more of the foregoing objectives have been realised as described in the independent claims. Preferred embodiments are described in the dependent claims.

### Detailed description of the invention.

Accordingly, the present invention discloses a method for injecting additives to seeds, beans, cereals and nut kernels that comprises the steps of:
a) filling a vessel with the seeds, beans, cereals and nut kernels;
b) introducing the vessel of step a) into an impregnation chamber;
c) preparing an impregnation fluid by mixing the desired additives with liquid carbon dioxide optionally in the presence of a co-solvent and at a mass ratio of additives to liquid carbon dioxide ranging between 1:1 and 10:1;
d) injecting the impregnation fluid of step c) into the impregnation chamber under supercritical conditions at a temperature of at least 31 °C and a pressure of at least 72.8 bars, with a flow rate suitable for maintaining a mass ratio (seeds, beans, cereals or nut kernels) to supercritical impregnation fluid ranging between 5 and 20 and for a period of time ranging between 30 minutes and 3 hours;
e) depressurising the impregnation vessel at a rate of 3 to 20 seconds per bar;
f) removing the impregnation fluid from the impregnation chamber and evaporating the carbon dioxide in order to recover the unused additives;
g) washing the seeds or kernels with a suitable food-grade edible oil such as vegetable oils or medium chain triglyceride (MCT) oil;
h) retrieving ready-to-use seeds, beans, cereals or nut kernels impregnated with the desired additives.

The seeds, beans, cereals or kernels are preferably selected from corn kernels, sunflower seeds and pumpkin seeds but may also be of any edible seeds including chia, flax, hemp, poppy, sesame and safflower, dry edible beans, including for example, adzuki, broad beans, kidney beans and lentils, edible nuts including as examples almond, cashew, hazelnuts, macadamia, pine, pistachio, and walnuts, green and roasted coffee beans, and whole grain cereals such as barley, buckwheat, corn, millet, oats, rice, sorghum and wheat

We believe that the method of the present invention encapsulates the additives within the seeds, beans, cereals and nut kernels. They can therefore offer an intense and long-lasting flavour. In addition, the encapsulation of additives inside the seeds, beans, cereals and nut kernels increases the stability of the encapsulated material resulting in a longer shelf life.

The important step of washing the seeds, beans, cereals and nut kernels with edible oils such as vegetable oils or medium chain triglyceride (MCT) oil, at the end of the process, removes from their surface all traces of additives thereby avoiding charring and burning when submitted to the elevated temperature necessary for cooking.

It may also be desirable to wash the impregnated seeds, beans, cereals or nut kernels with polar solvents such as water or ethanol in order to remove polar material or when said impregnated seeds, beans, cereals or nut kernels are subsequently cooked in water.

In a preferred embodiment, the present invention provides ready-to-cook popcorn kernels containing additives, wherein the additives are preferably flavours, flavouring ingredients, sweetners and/or colours.

The present invention also covers a method for preparing flavoured and/or coloured popcorn using the impregnated corn kernels according to the present invention.

In another preferred embodiment, the present invention provides ready-to-eat single or mixed flavoured popcorn.

The present invention also covers food applications comprising the impregnated seeds, beans, cereals or nut kernels.

The additives can preferably be selected for example from flavouring ingredients, sweeteners, taste potentiators such as capsaicin, colours, anti-oxidants, vitamins or a combination thereof. More preferably, they include one or more of flavouring ingredients, sweeteners, taste enhancers and colours.

Preferably, the temperature in the impregnation chambers is above 31 °C, and more preferably ranges between 31 and 75 °C.

Preferably, the pressure is any pressure higher than 72.8 bars, more preferably between 100 and 400 bars, most preferably higher than 200 bars. It is speculated that the higher the pressure, the shorter the time required for efficient impregnation. The use of much higher pressures is possible but may not be desirable economically due to the extended depressurisation times that may be required.

Preferably, depressurisation step e) is carried out at a rate of 5 to 10 seconds per bar.

The optional co-solvent(s), if needed to solubilise the additives used, is/are preferably selected from food-grade polar solvents such as ethanol, propylene glycol and/or water, and food-grade apolar solvents such as triacetin, vegetable oil or medium chain triglyceride (MCT) oil.

### Examples.

### Example 1.

45 g of corn kernels were placed in a vessel and introduced in the impregnation chamber. An impregnation solution was then prepared by mixing 10 vol % of peppermint essential oil, 70 vol% of medium chain triglyceride (MCT) oil and 20 vol% of 10% sucralose in ethanol. That impregnation solution was also injected in the impregnation chamber at a temperature of 40 °C, under a pressure of 300 bars, at with a flow rate of CO₂ of 6 to 7 g/min and a flow rate of flavouring of 6 to 7 g/min with a mass ratio of impregnating solution/supercritical carbon dioxide of 1:1 and during a period of time of 1 hour. The impregnation chamber was then depressurised at a rate of approximately 10 seconds per bar. The flavoured kernels were removed from the impregnation chamber and washed with about 50 ml of sunflower oil.

The corn kernels were then popped as follows: 50 ml of sunflower oil were placed in a vessel and heated in a 1000 watts microwave for a period of time of 3 minutes. About 20 to 30 of the infused corn kernels were placed in the vessel with the heated oil. The vessel was covered and placed in the microwave oven at full power for 30 to 60 seconds. The popped kernels were then removed and dabbed to remove excess oil.

The infused popcorn showed no signs of charring or burning and did not exhibit a strong odour. However, upon eating, a strong, sweet mint flavour developed in the mouth that grew in intensity as the popcorn mass was masticated. The eating experience demonstrated that the flavour and sweetener were evenly distributed throughout the puffed popcorn mass and both flavour and sweetness remained in the mouth for several minutes after swallowing.

### Example 2.

The same experimental procedure was repeated with an impregnation solution of jalapeño-cheese flavour. The flavouring solution was prepared from 45 vol% of aroma chemicals diluted in 45 vol% triacetin and 10 vol% MCT oil.

As in the case of Example 1 described above, the infused popcorn showed no signs of charring or burning and did not exhibit a strong odour. However, upon eating, a strong jalapeño-cheese flavour developed in the mouth that grew in intensity as the popcorn mass was masticated and became spicier over time as the encapsulated capsaicin was released into the mouth. The eating experience demonstrated that the flavour and capsaicin were evenly distributed throughout the puffed popcorn mass and both flavour and spiciness remained in the mouth for several minutes after swallowing.

## Claims

1. A method for injecting additives into seeds, beans, cereals and nut kernels that comprises the steps of:
a) filling a vessel with the seeds, beans, cereals and nut kernels;
b) introducing the vessel of step a) in an impregnation chamber;
c) preparing an impregnation fluid by mixing the desired additives with liquid carbon dioxide in the presence of a co-solvent and at a volume ratio additives to liquid carbon dioxide ranging between 1/1 and 10/1;
d) injecting the impregnation fluid of step c) into the impregnation chamber under supercritical conditions at a temperature of at least 31°C and a pressure of at least 72.8 bars, with a flow rate suitable to maintain a mass ratio (seeds or kernels) to supercritical impregnation fluid ranging between 5 and 20, and for a period of time ranging between 30 minutes and 3 hours;
e) depressurising the impregnation vessel at a rate ranging between 3 and 20 seconds per bar;
f) removing the impregnation fluid from the impregnation chamber and evaporating the carbon dioxide in order to recover the unused additives;
g) washing the seeds or kernels with edible vegetable oil or medium chain triglyceride (MCT) oil;
h) retrieving ready-to-use seeds, beans, cereals or nut kernels containing the desired additives.

2. The method of claim 1 wherein the seeds, beans, cereals or nut kernels are popcorn kernels.

3. The method of claim 1 or claim 2 wherein the additives are selected from flavours, flavour materials, colours, anti-oxidants, vitamins, sweeteners, taste modulators or a combination thereof.

4. The method of claim 3 wherein the additives are flavours, and/or colours, and/or sweeteners.

5. The method of any one of the preceding claims wherein the co-solvents are selected from ethanol, water or propylene glycol, triacetin, vegetable oil or medium chain triglyceride (MCT) oil.

6. Impregnated seeds, beans, cereals and nut kernels prepared with the method of any one of the preceding claims and **characterised in that** the additives are encapsulated within said seeds, beans, cereals and nut kernels.

7. The impregnated seeds, beans, cereals and nut kernels of claim 6 **characterised in that** their stability is improved with respect to equivalent products prepared by surface coating.

8. Impregnated corn kernels according to claim 6 or claim 7 wherein the additives are a mix of flavours, sweeteners and colours.

9. A method for preparing popcorn by spraying with edible oil and cooking the impregnated corn kernels of claim 8.

10. Ready-to-eat flavoured and/or coloured popcorn prepared by the method of claim 9.

11. Food applications comprising the impregnated seeds, beans, cereals, nut kernels or combinations thereof, of any one of claims 6 to 8.
